Europäisches Patentamt

European Patent Office

Office européen des brevets

(11) Veröffentlichungsnummer: **0 370 502**
A2

# (12) EUROPÄISCHE PATENTANMELDUNG

(21) Anmeldenummer: 89121635.0

(22) Anmeldetag: 23.11.89

(51) Int. Cl.⁵: **B60N 2/44**

(30) Priorität: 24.11.88 DE 3839732

(43) Veröffentlichungstag der Anmeldung:
30.05.90 Patentblatt 90/22

(84) Benannte Vertragsstaaten:
BE DE ES FR GB IT SE

(71) Anmelder: **P.A. Rentrop, Hubbert & Wagner Fahrzeugausstattungen GmbH & Co. KG**
**Nordsehler Strasse 38**
**D-3060 Stadthagen(DE)**

(72) Erfinder: **Deptolla, Bernd, Ing. grad.**
**Hauptstrasse 61**
**D-3066 Niedernwöhren(DE)**

(74) Vertreter: **Thielking, Bodo, Dipl.-Ing. et al**
**Patentanwälte Dipl.-Ing. Bodo Thielking**
**Dipl.-Ing. Otto Elbertzhagen Gadderbaumer**
**Strasse 20**
**D-4800 Bielefeld 1(DE)**

(54) Verstellgetriebe für Kraftfahrzeugsitze mit Bremse.

(57) Eine Verstellgetriebe für Kraftfahrzeugsitze weist eine Bremse mit einem Gehäuse auf, in dem ein zweiteilig ausgebildetes Bremsenteil angeordnet ist. Die beiden gleichachsig gelagerten Bremsenbereiche (1; 2) des Bremsenteils sind um vorgegebene Schwenkwinkel gegeneinander verschwenkbar. Es sind zwei Federelemente (3; 4) vorgesehen, die zwei Rollkörper (5; 6) in die Sperrlage zwischen Klemmflächen (16; 17) des Bremsenbereichs (1) und die gegenüberliegende kreiszylindrische Fläche des Gehäuses (7) drücken. Dabei weist der eine Bremsenbereich (2) in Mittelstellung in geringem Abstand von den Rollkörpern (5; 6) liegende Druckflächen (14; 15) auf, die bei Verdrehung in jede der beiden Richtungen jeweils einen Klemmkörper (5; 6) aus der Klemmlage lösen.

Fig. 1

## Verstellgetriebe für Kraftfahrzeugsitze mit Bremse

Die Erfindung betrifft ein Verstellgetriebe für Kraftfahrzeugsitze, mit einer Bremse, ferner mit einem Handrad zur Verstellung des Verstellgetriebes, wobei mit dem Handrad ein Bremsenteil fest verbunden ist, das in einer Mittelstellung das Verstellgetriebe fixiert und in zwei gegensätzlich verschwenkte Lagen das Verstellgetriebe für eine freies Drehen mittels des Handrades freigibt.

Bei Verstellgetrieben von Kraftfahrzeugsitzen sind zwei miteinander konkurrierende Forderungen zu erfüllen:

Einerseits müssen derartige Verstellgetriebe leichtgängig sein und eine Änderung der Sitzposition mit möglichst geringem Kraftaufwand ermöglichen, andererseits darf nicht eine unbeabsichtigte Verstellung des Sitzes oder eines Sitzteils unter Belastung erfolgen. Dieses Ziel wird erreicht, in dem man eine Bremse vorsieht, deren Wirkung beim Verdrehen des Handrades in unterschiedliche Drehrichtungen jeweils aufgehoben wird und die lediglich in der jeweiligen Arretierstellung des Getriebes wirkt.

Eine bekannte Bremse dieser Art ist als Schlingfederbremse ausgebildet. Das bekannte Prinzip hat verschiedene Nachteile. Es ist sowohl das Spiel des Handrades als auch das Spiel von der Getriebeseite her vergleichsweise groß. Ein weiterer wesentlicher Nachteil besteht darin, daß die Wirkung der bekannten Schlingfederbremse im Laufe der Zeit durch Verschleißerscheinungen deutlich nachläßt.

Ausgehend von diesem Stand der Technik liegt der Erfindung die Aufgabe zugrunde, ein Verstellgetriebe der als bekannt vorausgesetzten Art so auszubilden, daß dessen Bremse ein nur sehr geringes Spiel aufweist und praktisch verschleißfrei arbeitet.

Die Lösung dieser Aufgabe erfolgt dadurch, daß das Bremsenteil aus zwei gleichachsig gelagerten Bremsenbereichen bestehen, die um vorgebene Schwenkwinkel gegeneinander verschwenkbar sind, wobei der eine Bereich zwei Federelemente enthält, die zwei Rollkörper in die Sperrlage zwischen Klemmflächen des Bremsenbereichs und die gegenüberliegende kreiszylindrische Fläche des Gehäuses drücken und daß der zweite Bremsenbereich in Mittelstellung in geringem Abstand von den Rollkörpern liegende Druckflächen aufweist, die bei Verdrehung in jede der beiden Richtungen jeweils einen Klemmkörper aus der Klemmlage lösen.

Bevorzugte Ausgestaltungen der Erfindung sind in den Unteransprüchen beschrieben.

Die erfindungsgemäße Konstruktion ist nahezu spielfrei. Sie erzeugt eine sichere Bremswirkung, die auch nach langdauerndem Gebrauch nicht nachläßt. Bei entsprechender Materialwahl tritt praktisch keine Verschleißwirkung ein.

Nachstehend wird eine bevorzugte Ausführungsform der Erfindung anhand der Zeichnung im einzelnen beschrieben. Es zeigen:

Figur 1 eine Ansicht auf die Bremse von der Seite eines nicht dargestellten Verstellgetriebes aus,

Figur 2 einen Schnitt entlang Ebene II-II in Figur 1,

Figur 3 einen Schnitt entlang Ebene III-III in Figur 2.

Die Bremse besitzt ein topfförmiges Gehäuse 7 mit einem Flansch 19. Der Flansch 19 ist über Befestigungselemente, welche die Bohrungen 20 durchsetzen, mit dem orstfesten Teil eines nicht dargestellten Verstellgetriebes, vorzugsweise eines Taumelgetriebes verbunden.

Das topfförmige Gehäuse 7 besitzt eine zentrale Bohrung 21, welche von dem Zapfen 22 eines zweiten Bremsenteils 2 durchsetzt wird. Der Zapfen 22 ist mit dem nicht dargestellten Handrad für die Verstellung eines Taumelgetriebes verbunden. Das zweite Bremsenteil 2 wirkt mit dem ersten Bremsenteil 1 zusammen. Das erste Bremsenteil 1 ist über eine Vierkantöffnung 23 mit dem drehbaren Zahnrad des Taumelgetriebes in nicht dargestellter Weise verbunden.

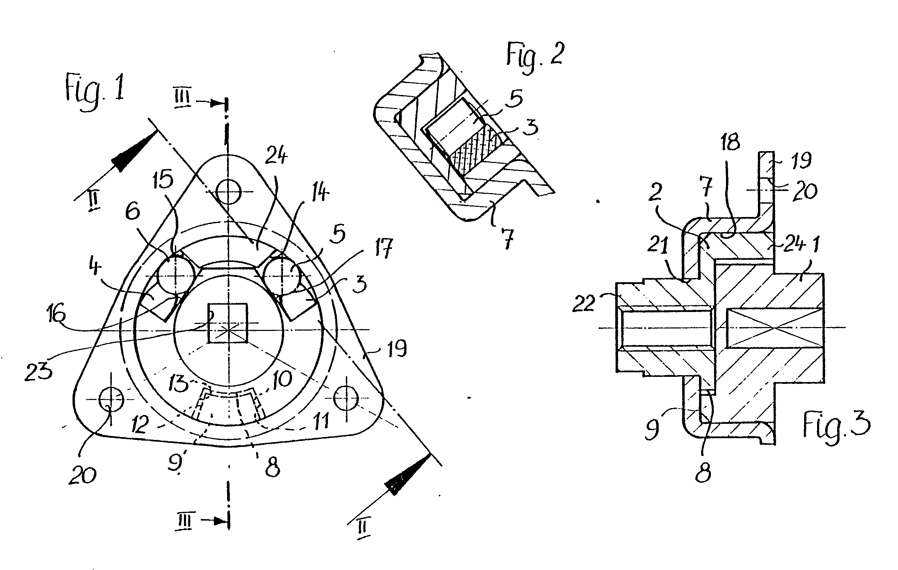

Der erste Bremsenbereich 1 besitzt gemäß Figur 1 in seinem oberen Bereich Aussparungen unterhalb und zu beiden Seiten eines klauenartigen Bereichs 24 des zweiten Bremsenbereichs. In der gemäß Figur 1 rechten Aussparung liegen ein Federelement 3 und eine Rollkörper 5, der als kreiszylindrischer Rollkörper ausgebildet ist, wie dies aus Figur 2 ersichtlich ist.

Auf der gemäß Figur 1 linken Seite sind ein Federelement 4 und ein ebenfalls kreiszylindrischer Rollkörper 6 angeordnet.

Die Rollkörper 5 und 6 laufen auf winklig zueinander angeordneten Flächen 17 und 16 ab. Deren Abstand von der kreiszylindrischen Innenfläche 18 des Gehäuses 7 nimmt von dem klauenartigen Bereich 24 in Richtung auf die Federelemente 3 und 4 zu.

In der in Figur 1 dargestellten Neutralstellung drücken die beiden Federelemente 3 und 4, welche als Blöcke aus elastischem Material ausgebildet sind, die Rollkörper 5 und 6 in die Klemmlage zwischen den geneigten Flächen 17 und 16 einerseits und der Innenfläche 18 des Gehäuses 7 andererseits. In dieser Position sind also das Getriebe und das Handrad blockiert. Bei einem Verdrehen des Handrades wird über den Zapfen 22 des zweiten Bremsenbereichs 2 der klauenartige Bereich 24 gemäß Figur 1 nach rechts oder links verschwenkt. Dies führt dazu, daß die Druckfläche 14 oder 15 den Rollkörper 5 oder 6 gegen die Kraft des Federelements 3 oder 4 drückt. Damit wird die kraftschlüssige Klemmverbindung zwischen dem ersten Bremsenbereich 1, den Rollkörpern 5 und 6 und dem Gehäuse 7 aufgehoben. Es kann damit der zweite Bremsenbereich soweit verdreht werden, bis dessen Anlageflächen 11 und 13 an mit geringem Abstand angeordneten gegenüberliegenden Gegenflächen 10 und 12 eines klauenartigen Segments 9 anliegen. Bei einem weiteren Drehen, wird der erste Bremsenbereich 1 entweder über die Anlageflächen 10 und 11 oder 12 und 13 mitgenommen.

## Ansprüche

1. Verstellgetriebe für Kraftfahrzeugsitze, mit einer Bremse, ferner mit einem Handrad zur Verstellung des Verstellgetriebes, wobei mit dem Handrad ein Bremsenteil fest verbunden ist, das in einer Mittelstellung das Verstellgetriebe fixiert und in zwei gegensätzlich verschwenkten Lagen das Verstellgetriebe für ein freies Drehen mittels des Handrades freigibt,
dadurch gekennzeichnet,
daß das Bremsenteil aus zwei gleichachsig gelagerten Bremsenbereichen (1;2) besteht, die um vorgegebene Schwenkwinkel gegeneinander verschwenkbar sind, wobei der eine Bereich (1) zwei Federelemente (3;4) enthält, die zwei Rollkörper (5;6) in die Sperrlage zwischen Klemmflächen (16;17) des Bremsenbereichs (1) und die gegenüberliegende kreiszylindrische Fläche (18) des Gehäuses (7) drücken und daß der zweite Bremsenbereich (2) in Mittelstellung in geringem Abstand von den Rollkörpern (5;6) liegende Druckflächen (14; 15) aufweist, die bei Verdrehung in jede der beiden Richtungen jeweils einen Klemmkörper (5;6) aus der Klemmlage lösen.

2. Verstellgetriebe nach Anspruch 1,
dadurch gekennzeichnet,
daß die Federelemente (3;4) Blöcke aus elastischem Material sind.

3. Verstellgetriebe nach Anspruch 1 oder 2,
dadurch gekennzeichnet,
daß der zweite Bremsenbereich (2) zwei gegeneinander geneigt angeordnete Flächen (17;16) aufweist, auf denen die Rollkörper (5;6) ablaufen und deren radial gemessener Abstand von der kreiszylindrischen Fläche (18) des Gehäuses (17) in Richtung auf das Federelement (3;4) zunimmt.

4. Verstellgetriebe nach einem oder mehreren der Ansprüche 1 bis 3,
dadurch gekennzeichnet,
daß der erste Bremsenbereich (1) und der zweite Bremsenbereich (2) Mitnahmeflächen (10; 12) und (11; 13) aufweisen, die in Mittelstellung der beiden Bremsenbereiche (1 und 2) einen Abstand voneinander halten um beim Verdrehen aneinander anlegbar sind.

5. Verstellgetriebe nach einem oder mehreren der Ansprüche 1 bis 4,
dadurch gekennzeichnet,
daß die Anlageflächen (10; 11; 12; 13) zumindest annähernd radial verlaufen.

6. Verstellgetriebe nach einem oder mehreren der Ansprüche 1 bis 5,
dadurch gekennzeichnet,
daß die Anlageflächen (10; 12 und 11; 13) an einem Segmentfinger (9) des einen Bremsbereichs (1) und einer Segmentaussparung (8) des anderen Bremsenbereichs (2) vorgesehen sind.

Fig. 1

Fig. 2

Fig. 3

EP 0 370 502 A2